# EUROPEAN PATENT SPECIFICATION

(11) **EP 3 318 816 B1**
(45) Date of publication and mention of the grant of the patent: **11.11.2020**
(21) Application number: 15897187.9
(22) Date of filing: 02.07.2015
(51) Int. Cl.: F24S 10/70, F24S 40/00, F16L 53/00

(54) **HEATING SYSTEM**
HEIZSYSTEM
SYSTÈME DE CHAUFFAGE

(43) Date of publication of application: 09.05.2018
(73) Proprietor: Chiyoda Corporation, Kanagawa 220-8765 (JP)
(72) Inventor: KANEMITSU, Masaya, Yokohama-shi Kanagawa 220-8765 (JP); SHIRAI, Jotaro, Yokohama-shi Kanagawa 220-8765 (JP); KAIDA, Ryuichi, Yokohama-shi Kanagawa 220-8765 (JP); SUZUKI, Yasushi, Yokohama-shi Kanagawa 220-8765 (JP); NISHIJIMA, Yasuyuki, Yokohama-shi Kanagawa 220-8765 (JP)
(74) Representative: Schröer, Gernot H.
(86) International application number: PCT/JP2015/069148
(87) International publication number: WO 2017/002260

(56) References cited:
- WO-A1-2010/079318
- CN-U- 203 731 722
- JP-A- H06 241 376
- JP-A- 2014 159 892
- JP-A- 2014 523 997
- JP-A- 2014 531 552
- JP-B2- S 628 696
- US-A1- 2010 175 689
- US-A1- 2014 238 523

## Description

The present invention relates to a heating system that heats a heat transfer fluid flow path of a solar heat collecting device.

Solar heat power generation systems that perform power generation by condensing sunlight on a heat transfer fluid flow path to heat a heat transfer fluid flowing in the heat transfer fluid flow path and rotating a steam turbine generator using the heated heat transfer fluid have been known. The solar heat power generation systems can generate power for 24 hours by heat holder with less expensive installation cost than a sunlight power generation system. Conventionally, a solar heat power generation system using oil as a heat transfer fluid has been proposed (see, for example, JP 2014-102013 A).

In recent years, molten salt has attracted attention as a heat transfer fluid used for the solar heat power generation system. Since the molten salt has a high boiling point, operation temperature can be made relatively high with the molten salt, and power generation efficiency is improved by generating high-temperature steam.

Since the molten salt solidifies at about 250°C, heat is deprived by the heat transfer fluid flow path so that the molten salt may solidify in a state where temperature of the heat transfer fluid flow path is relatively low when the molten salt is poured into the heat transfer fluid flow path after start-up or maintenance. Thus, it is necessary to warm the heat transfer fluid flow path to predetermined temperature or higher before pouring the molten salt into the heat transfer fluid flow path.

It is conceivable to cause a current to flow to the heat transfer fluid flow path as one technique of heating the heat transfer fluid flow path. When the current flows, the heat transfer fluid flow path is warmed by Joule heat at that time.

US 2014/238523 A1 and CN 203 731 722 U disclose solar heat power generation systems comprising a heat transfer fluid flow path through which a heat transfer fluid receiving solar heat flows, and a heating system for heating the heat transfer fluid flow path, wherein an energizer energizes the heat transfer fluid flow path by supplying an electric current to the heat transfer fluid flow path so as to heat the heat transfer fluid flow path, and wherein the energizer is controlled in response to the temperature of the heat transfer flow path.

The heat transfer fluid flow path is generally constituted by a plurality of members. An electric resistance is different for each member, and a rate of temperature rise when a current flows is also different for each member. When the temperature of each member is measured, it is possible to properly heat the entire heat transfer fluid flow path such that all the members do not exceed quality assurance temperature. However, there are also some members that have poor workability in attaching a sensor for temperature measurement.

The present invention has been made in view of such circumstances, and an object thereof is to provide a technique capable of properly heating the entire heat transfer fluid flow path by measuring temperature of one member among a plurality of members constituting the heat transfer fluid flow path without measuring temperature of the other member.

In order to solve the above-described problem, a solar heat power generation system and heating system according to the present invention have a heating system for heating a heat transfer fluid flow path through which a heat transfer fluid receiving solar heat flows. The heat transfer fluid flow path is constituted by a plurality of members which are connected in series and have different electric resistances. The heating system includes: an energizer that energizes the heat transfer fluid flow path so as to heat the heat transfer fluid flow path; a temperature measurer that measures temperature of one member among the plurality of members; and a processor that compares the measured temperature of the one member with assumed temperature of one member, set in advance, with respect to an energization time and performs processing according to a result of the comparison.

According to this aspect, for example, energization is performed such that the temperature of the one member increases along the assumed temperature with respect to the energization time set in advance, so that the temperature of another member can be increased as expected, only a specific member is adequately heated, and it is possible to prevent the other member from being excessively heated or being insufficiently heated. Thus, it is possible to appropriately heat the entire heat transfer fluid flow path.

The processor controls energization performed by the energizer according to the comparison result.

The processor may stop energization when the measured temperature of the one member exceeds the assumed temperature by predetermined temperature or a predetermined rate and start energization when the measured temperature is lower than the assumed temperature by predetermined temperature or a predetermined rate.

The assumed temperature of the one member with respect to the energization time is set such that the plurality of members is warmed without exceeding each quality assurance temperature.

The one member whose temperature is measured by the temperature measurer may be a member having a lowest rate of temperature rise caused by energization among the plurality of members constituting the heat transfer fluid flow path.

The heat transfer fluid flow path is constituted by heat collection elements that receive collected light, flexible joints that are connected to the heat collection elements, and a pipe that is connected to the flexible joints, and the one member whose temperature is measured by the temperature measurer may be the pipe.

Incidentally, arbitrary combinations of the above components and those obtained by converting the expressions of the present invention among devices, methods, systems, and the like are also effective as aspects of the present invention.

According to the present invention, it is possible to properly heat the entire heat transfer fluid flow path by measuring the temperature of the one member among the plurality of members constituting the heat transfer fluid flow path without measuring temperature of the other member.

Fig. 1 is a schematic diagram illustrating a solar heat power generation system according to an embodiment.
Fig. 2 is a schematic diagram illustrating a solar heat collecting device and a heating system of Fig. 1.
Fig. 3 is a circuit diagram when a heat transfer fluid flow path to which a heating device is connected is viewed as a circuit.
Fig. 4 is a block diagram illustrating functions and configurations of the heating system.
Fig. 5 is a graph illustrating assumed temperature of a pipe with respect to an energization time, which is held in an assumed temperature holder.

Hereinafter, the same or equivalent constituent elements and members illustrated in the respective drawings will be denoted by the same reference numerals, and a redundant description thereof will be omitted as appropriate. In addition, dimensions of the members in the respective drawings are illustrated in an appropriately enlarged and reduced manner in order to facilitate understanding. In addition, some of the members which are not important for describing the embodiment are not displayed in the respective drawings.

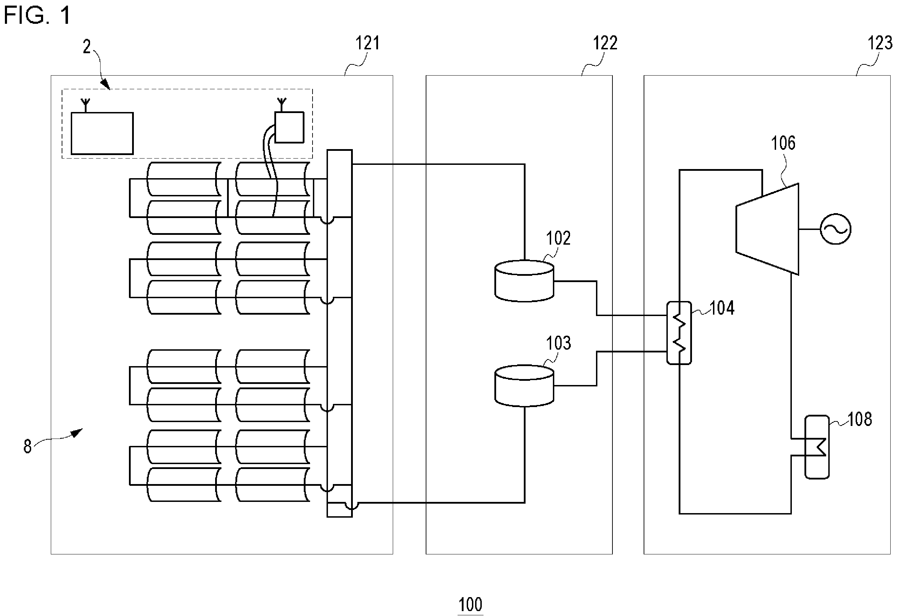

Fig. 1 is a schematic diagram illustrating a solar heat power generation system 100 according to an embodiment. The solar heat power generation system 100 includes three areas of a heat collection area 121, a heat storage area 122, and a power generation area 123.

The heat collection area 121 mainly includes a solar heat collecting device 8 and a heating system 2. The solar heat collecting device 8 collects sunlight and heats a heat transfer fluid flowing in a heat transfer fluid flow path (to be described later). The heated heat transfer fluid is sent to the heat storage area 122. The heating system 2 heats the heat transfer fluid flow path in advance so as to prevent molten salt from solidifying by depriving heat from the heat transfer fluid flow path at the time of pouring the molten salt into the heat transfer fluid flow path.

The heat storage area 122 includes a hot tank 102 and a cold tank 103. As the heat of the heated heat transfer fluid is stored using the hot tank 102, it is possible to generate power when necessary. For example, it is possible to generate power at night or in the bad weather in daytime.

The power generation area 123 includes a steam generator 104, a steam turbine generator 106, and a condenser 108. The steam generator 104 generates steam using the heated heat transfer fluid stored in the hot tank 102, and the steam turbine generator 106 rotates a turbine by the steam. Power is generated by this rotation. A relatively low-temperature heat transfer fluid subjected to heat exchange in the steam generator 104 is sent to the cold tank 103. The condenser 108 returns the steam to a liquid.

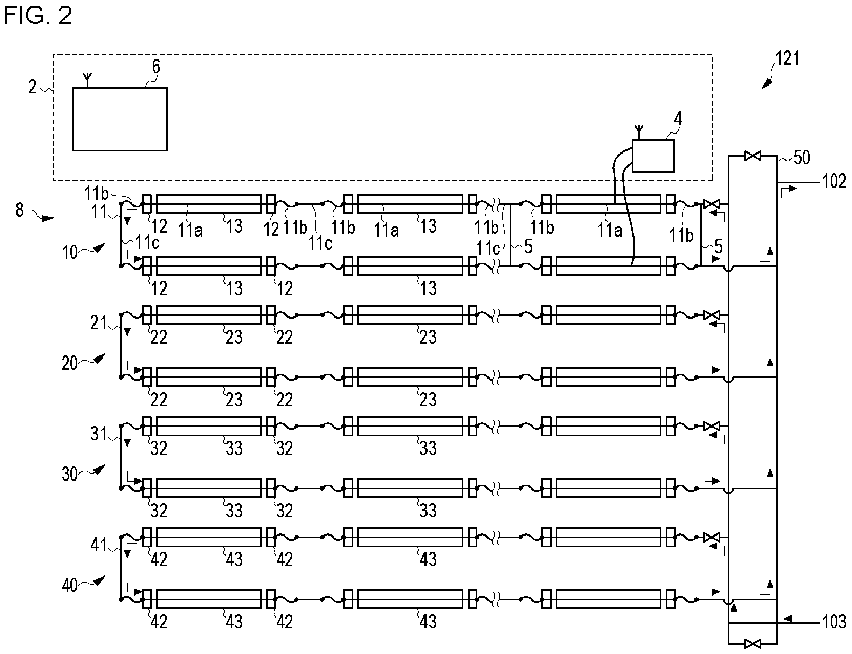

Fig. 2 is a schematic diagram illustrating the solar heat collecting device 8 and the heating system 2.

The solar heat collecting device 8 includes a first light collector 10, a second light collector 20, a third light collector 30, a fourth light collector 40, and a connection flow path 50. The first light collector 10 includes a first heat transfer fluid flow path 11, a plurality of first supports 12, and a plurality of first reflectors 13.

Each of the plurality of first supports 12 is formed using steel and erected on a cradle (not illustrated) made of concrete. The first support 12 is disposed along the first heat transfer fluid flow path 11 and supports the first heat transfer fluid flow path 11. In addition, the first support 12 rotatably supports the first reflector 13.

The first reflector 13 collects the sunlight on the first heat transfer fluid flow path 11 to heat the heat transfer fluid flowing inside the first heat transfer fluid flow path 11. A rotating device (not illustrated) is connected to the first reflector 13. The rotating device rotates the first reflector 13 according to, for example, a position of the sun. As a result, the heat transfer fluid is efficiently heated.

The first heat transfer fluid flow path 11 includes a plurality of heat collection elements 11a, a plurality of flexible joints 11b, and a plurality of pipes 11c. These are formed using a metal material such as stainless steel and aluminum. The heat collection elements 11a is a linearly extending pipe and is supported such that its center is positioned at a focal point of a parabolic-cylindrical reflection surface of the first reflector 13. The flexible joints 11b is a flexible joints and is connected to the heat collection elements 11a. The pipe 11c is a rigid pipe that is not flexible and connects the flexible joints 11b to each other. The heat collection elements 11a, the flexible joints 11b, and the pipe 11c are made of different materials, and thus, have different electric resistances. For example, lengths of each of the heat collection elements 11a, each of the flexible joints 11b, and each of the pipes 11c are 100 to 200 m, 1 to 5 m, and 5 to 30 m, respectively.

Molten salt as a heat transfer fluid receiving solar heat flows in the first heat transfer fluid flow path 11. The molten salt has a boiling point higher than that of synthetic oil, conventionally used in solar heat collecting devices, and thus, is warmed to higher temperature. As a result, the power generation efficiency of the solar heat power generation system 100 is improved. On the other hand, the molten salt solidifies at about 250°C. The molten salt basically does not solidify since being warmed by the solar heat at the time of collecting the light, but may solidify as the heat thereof is deprived by the first heat transfer fluid flow path 11 when temperature of the first heat transfer fluid flow path 11 is in a relatively low state before pouring the molten salt into the first heat transfer fluid flow path 11, for example, at the time of start-up or after maintenance. Thus, it is necessary to warm the first heat transfer fluid flow path 11 to predetermined temperature or higher before pouring the molten salt into the first heat transfer fluid flow path 11.

It is conceivable to warm the first heat transfer fluid flow path 11 by laying a heating wire in the first heat transfer fluid flow path 11 and causing a current to flow therethrough as a technique of warming the first heat transfer fluid flow path 11. However, the heat collection elements 11a of the first heat transfer fluid flow path 11 is covered with a vacuum glass tube for heat insulation, and thus, it is difficult to lay the heating wire. Thus, a heating device 4 is connected to the first heat transfer fluid flow path 11 to cause a current to flow directly to the first heat transfer fluid flow path 11, and the first heat transfer fluid flow path 11 is warmed by Joule heat at that time in the present embodiment.

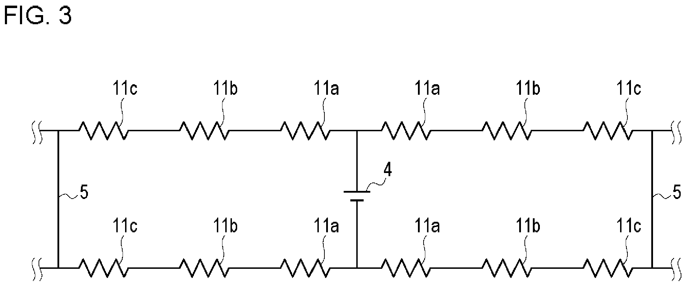

Fig. 3 is a circuit diagram when the first heat transfer fluid flow path 11 to which the heating device 4 is connected is viewed as a circuit. A closed loop circuit sequentially circulating the heating device 4, the heat collection elements 11a, the flexible joints 11b, the pipe 11c, a connection wire 5, the pipe 11c, the flexible joints 11b, and the heat collection elements 11a is formed by the first heat transfer fluid flow path 11, the heating device 4, and the connection wire 5. The heat collection elements 11a, the flexible joints 11b, and the pipe 11c constituting the first heat transfer fluid flow path 11 are electric resistances connected in series, and the Joule heat is generated when the current flows to these resistances. As a result, the entire first heat transfer fluid flow path 11 is warmed. The description will be given returning to Fig. 2.

The second light collector 20 includes a second heat transfer fluid flow path 21, a plurality of second supports 22, and a plurality of second reflectors 23.

The third light collector 30 includes a third heat transfer fluid flow path 31, a plurality of third supports 32, and a plurality of third reflectors 33.

The fourth light collector 40 includes a fourth heat transfer fluid flow path 41, a plurality of fourth supports 42, and a plurality of fourth reflectors 43.

Each of the second heat transfer fluid flow path 21, the third heat transfer fluid flow path 31, and the fourth heat transfer fluid flow path 41 is configured in the same manner as the first heat transfer fluid flow path 11.

Each of the second support 22, the third support 32, and the fourth support 42 is configured in the same manner as the first support 12.

Each of the second reflector 23, the third reflector 33, and the fourth reflector 43 is configured in the same manner as the first reflector 13.

The connection flow path 50 is an annular flow path and is connected to the first heat transfer fluid flow path 11, the second heat transfer fluid flow path 21, the third heat transfer fluid flow path 31, and the fourth heat transfer fluid flow path 41. In addition, the connection flow path 50 is also connected to the hot tank 102 and the cold tank 103 of the heat storage area 122. Therefore, the first heat transfer fluid flow path 11, the second heat transfer fluid flow path 21, the third heat transfer fluid flow path 31, the fourth heat transfer fluid flow path 41, the hot tank 102, and the cold tank 103 are connected via the connection flow path 50. The heat transfer fluid heated in each heat transfer fluid flow path is sent to the hot tank 102 via the connection pipeline 50. In addition, the relatively low-temperature heat transfer fluid stored in the cold tank 103 is sent to each heat transfer fluid flow path via the connection pipeline 50.

The heating system 2 includes the heating device 4 that heats the heat transfer fluid flow path and a heating control device 6 that controls heating using the heating device 4. The heating device 4 is a portable type and moves in the state of being loaded on a carrier or the like of a vehicle (not illustrated).

When the molten salt is poured into the heat transfer fluid flow path, the connection flow path 50 is first heated prior to heating of the heat transfer fluid flow path. For example, a heating wire may be laid in the connection flow path 50 to heat the connection flow path 50 by causing a current to flow to the heating wire. Further, for example, the connection flow path 50 may be heated by combustion heat of fossil fuel. When the connection flow path 50 is warmed to predetermined temperature (for example, 290°C) or higher, the molten salt is poured into the connection flow path 50.

Subsequently, the heating device 4 is connected to the first heat transfer fluid flow path 11, and the first heat transfer fluid flow path 11 is heated by the heating system 2. When the first heat transfer fluid flow path 11 is warmed to predetermined temperature (for example, 290°C) or higher, the molten salt is poured into the first heat transfer fluid flow path 11. When confirming that the molten salt flows in the first heat transfer fluid flow path 11 without solidifying, the heating using the heating system 2 is stopped. The molten salt is cooled while flowing in the first heat transfer fluid flow path 11 when the heating by the heating system 2 is stopped in the case where sunlight is not collected in the first heat transfer fluid flow path 11, but the molten salt does not solidify in the first heat transfer fluid flow path 11 even after the heating by the heating system 2 is stopped if the connection flow path 50 is warmed up to high temperature (for example, 330°C) taking such cooling into consideration. Subsequently, the heating device 4 is moved to the second light collector 20 to be connected to the second heat transfer fluid flow path 21, and the second heat transfer fluid flow path 21 is heated by the heating system 2. In this manner, the respective heat transfer fluid flow paths are sequentially heated.

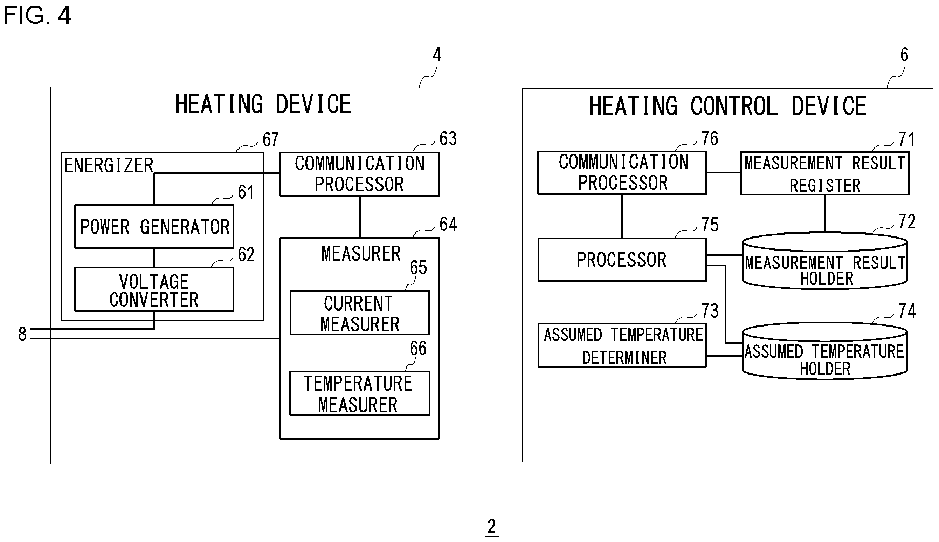

Fig. 4 is a block diagram illustrating functions and configuration of the heating system 2. The respective blocks illustrated in this block diagram can be implemented by elements or mechanical devices including a CPU of a computer in terms of hardware and implemented by a computer program and the like in terms of software. Here, functional blocks implemented by the cooperation of hardware and software are illustrated. Accordingly, it is understood by those skilled in the art that such function blocks can be implemented in various forms using combinations of the hardware and the software.

The heating device 4 includes an energizer 67, a communication processor 63, and a measurer 64. The communication processor 63 is a communication interface for connection with the heating control device 6 by radio.

The energizer 67 energizes the heat transfer fluid flow path. Specifically, the energizer 67 includes a power generator 61 and a voltage converter 62 in the present embodiment. When receiving a heating start instruction from the heating control device 6 via the communication processor 63, the power generator 61 starts to generate power. The power generator 61 generates power using, for example, fossil fuel. The voltage converter 62 boosts a supply voltage of the power generator 61 to a predetermined voltage (for example, 400 V) and supplies a boosted current to the heat transfer fluid flow path. Then, Joule heat is generated and the heat transfer fluid flow path is heated. When receiving a heating stop instruction from the heating control device 6 via the communication processor 63, the power generator 61 stops generating power. Then, no current is supplied to the heat transfer fluid flow path. That is, the heat transfer fluid flow path is not heated.

The measurer 64 includes a current measurer 65 and a temperature measurer 66. The current measurer 65 measures a current value flowing in the heat transfer fluid flow path. The temperature measurer 66 measures temperature of any one of the heat collection elements 11a, the flexible joints 11b, and the pipe 11c constituting the heat transfer fluid flow path using a temperature sensor (not illustrated). In the present embodiment, the temperature measurer 66 measures the temperature of the pipe 11c having a high workability in attaching the temperature sensor. In particular, the current measurer 65 measures the temperature of the pipe on a downstream side which is hardly warmed the most. The measurer 64 sends a measurement result to the heating control device 6 via the communication processor 63.

The heating control device 6 includes a measurement result register 71, a measurement result holder 72, an assumed temperature determiner 73, an assumed temperature holder 74, a processor 75, and a communication processor 76. The communication processor 76 is a communication interface for connection with the heating device 4 by radio. The measurement result register 71 receives the measurement result from the heating device 4 via the communication processor 76 and registers the received measurement result in the measurement result holder 72.

The assumed temperature determiner 73 determines assumed temperature of the pipe with respect to a heating (energization) time (hereinafter simply referred to as "the assumed temperature of the pipe"). Here, since the heat collection elements, the flexible joints, and the pipe are connected in series, the same amount of current flows in these members. However, since the heat collection elements, the flexible joints, and the pipe have the different electric resistances, rates of temperature rise thereof are also different from each other. Thus, the temperature of the heat collection elements or the flexible joints may exceed the quality assurance temperature even when the temperature of the pipe does not exceed the quality assurance temperature. Therefore, the assumed temperature determiner 73 particularly determines the assumed temperature of the pipe such that the temperature of the heat collection elements and the flexible joints as well as the pipe does not exceed the quality assurance temperature.

For example, the assumed temperature of the pipe at which it is confirmed that neither the heat collection elements nor the flexible joints exceeds the quality assurance temperature by simulation, which is the assumed temperature under various ambient temperature at which all of the pipe, the heat collection elements, and the flexible joints reach the predetermined temperature the fastest may be prepared in advance, and the assumed temperature determiner 73 may select one of them based on the ambient temperature.

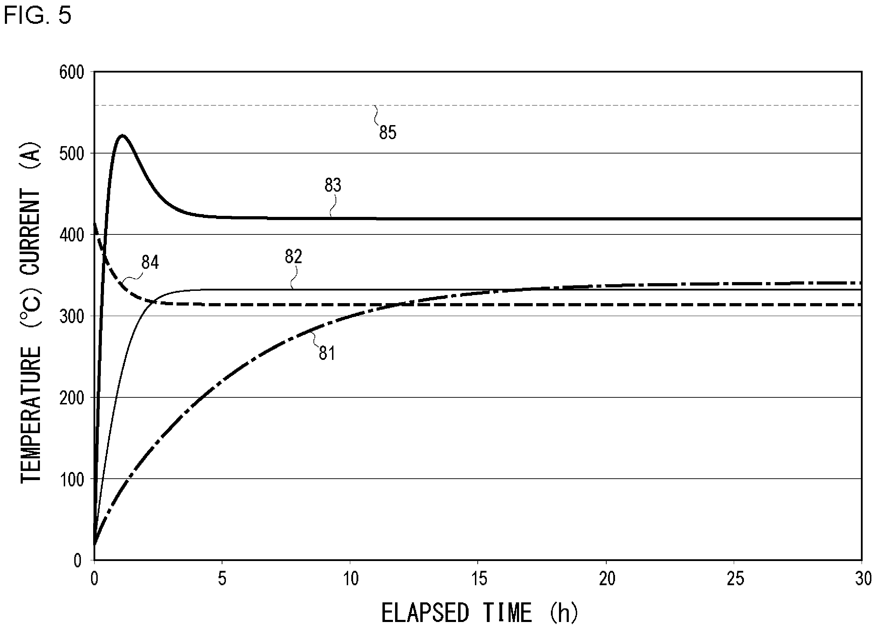

The assumed temperature holder 74 holds the assumed temperature of the pipe determined by the assumed temperature determiner 73. Fig. 5 is a graph illustrating the assumed temperature of the pipe held in the assumed temperature holder 74. In Fig. 5, the horizontal axis represents an elapsed time from start of heating (energization), and the vertical axis represents the temperature of the pipe or the current flowing in the heat transfer fluid flow path. Graph 81 represents the assumed temperature of the pipe. Graphs 82, 83, and 84 represent the temperature of the heat collection elements, the temperature of the flexible joints, and the current flowing in the heat transfer fluid flow path, respectively, when the temperature of the pipe rises as illustrated in the graph 81. In addition, a broken line 85 represents the quality assurance temperature of the pipe, the heat collection elements, and the flexible joints.

As illustrated in Fig. 5, the pipe has the lowest rate of temperature rise caused by energization among the plurality of members constituting the heat transfer fluid flow path. Therefore, the other members have already reached the predetermined temperature when the temperature of the pipe reaches the predetermined temperature. Thus, it is possible to easily determine the completion of heating of the heat transfer fluid flow path by measuring the temperature of the pipe.

Returning to Fig. 4, the processor 75 refers to the measurement result holder 72 and the assumed temperature holder 74 and compares the temperature of the pipe measured by the temperature measurer 66 of the heating device 4 (hereinafter simply referred to as the "actual temperature") with the assumed temperature of the pipe. When the actual temperature of the pipe becomes higher than the assumed temperature by a first ratio (for example, 5%) or more, the processor 75 sends the heating stop instruction to the heating control device 6. In addition, when the actual temperature of the pipe becomes lower than the assumed temperature by a second ratio (for example, 5%) or more, the processor 75 sends the heating start instruction to the heating control device 6. That is, the processor 75 controls the heating device 4 such that the temperature of the pipe rises along the graph 81 in Fig. 5.

Here, the pipe, the heat collection elements, and the flexible joints are made of metal, and thus, the electric resistances thereof increase in proportion to the temperature rise. In addition, most of the heat transfer fluid flow path is occupied by the heat collection elements, and thus, most of the electric resistance of the heat transfer fluid flow path is occupied by the heat collection elements when the heat transfer fluid flow path is viewed as the circuit. Therefore, the amount of the current flowing in the heat transfer fluid flow path decreases roughly in inverse proportion to the temperature rise of the heat collection elements. In other words, the amount of the current flowing in the heat transfer fluid flow path is roughly determined by the electric resistance of the heat collection elements. Therefore, even if the temperature of the flexible joints having the highest rate of temperature rise caused by energization increases and the electric resistance thereof increases, the current amount does not change much. When the current amount does not change even if the electric resistance increases, the temperature of the flexible joints further increases. As a result, the temperature of the flexible joints becomes an overheated state immediately after the start of heating (energization) (see Fig. 5).

Thus, the heating (energization) may be more strictly controlled immediately after being started such that the temperature of the flexible joints does not exceed the quality assurance temperature. For example, it may be configured such that the heating stop instruction is sent to the heating control device 6 when the actual temperature of the pipe becomes higher than the assumed temperature by a third ratio (< the first ratio) (for example, 5%) or more, and the heating start instruction is sent to the heating control device 6 when the actual temperature of the pipe becomes lower than the assumed temperature by a fourth ratio (< the second ratio (for example, 5%) or more until a predetermined time elapses from the start of heating or until the current flowing in the heat transfer fluid flow path becomes constant.

The heating (energization) using the heating device 4 is controlled based on the actual temperature of the pipe according to the heating system 2 according to the present embodiment described above. As a result, the temperature of the pipe increases along the assumed temperature illustrated in the graph 81 of Fig. 5. In this case, the temperature of the heat collection elements and the temperature of the flexible joints increase along the graphs 82 and 83, respectively, in Fig. 5. That is, the pipe, the heat collection elements, and the flexible joints are warmed to the predetermined temperature without exceeding the quality assurance temperature. Since the heat collection elements is covered by a glass pipe and the flexible joints moves, the both have poor workability in attaching the temperature sensor. However, only the temperature of the pipe having relatively high workability in attaching the temperature sensor is measured according to the heating system 2 according to the present embodiment, and thus, it is possible to properly heat the entire heat transfer fluid flow path.

In addition, the heating device 4 is a portable type, and the respective heat transfer fluid flow paths are sequentially heated according to the heating system 2 according to the present embodiment. It is possible to reduce the number of the heating devices 4 as compared with the case where a fixed-type heating device 4 is provided in each of the heat transfer fluid flow paths.

As above, the present invention has been described based on the embodiment. This embodiment is illustrative, and it will be obvious to those skilled in the art that various types of modification examples can be made in combinations of the respective components and the respective processes, and further, such modification examples are included in a range of the invention.

### (Modification 1)

Although the case where the respective heat transfer fluid flow paths are warmed by the single heating device 4 has been described in the embodiment, the present invention is not limited thereto. The heating system 2 may include a plurality of the heating devices 4 such that the respective heat transfer fluid flow paths are warmed by the plurality of heating devices 4. For example, the three heating devices 4 may be connected to the first heat transfer fluid flow path 11, three closed loop circuits may be formed by the three heating devices 4 and the first heat transfer fluid flow path 11, and the first heat transfer fluid flow path 11 may be warmed by Joule heat generated when a current flows to the respective circuits. The second heat transfer fluid flow path 21, the third heat transfer fluid flow path 31, and the fourth heat transfer fluid flow path 41 may be warmed sequentially by the three heating devices 4.

### (Modification 2)

Although the description has been given in the embodiment regarding the case where the processor 75 of the heating control device 6 compares the actual temperature of the pipe with the assumed temperature, and sends the heating start instruction or heating stop instruction to the heating device 4 based on the comparison result, thereby controlling the energization (heating) using the heating device 4, the present invention is not limited thereto. The processor 75 may notify a user that the actual temperature deviates from the assumed temperature instead of sending the heating start instruction or heating stop instruction to the heating device 4. In this case, the heating (energization) using the heating device 4 may be controlled by a manual operation of the user.

### (Modification 3)

Although the description has been given in the embodiment regarding the case where the processor 75 sends the heating stop instruction to the heating control device 6 when the actual temperature of the pipe becomes higher than the assumed temperature by the first ratio (for example, 5%) or more, and sends the heating start instruction to the heating control device 6 when the actual temperature of the pipe becomes lower than the assumed temperature by the second ratio (for example, 5%) or more, the present invention is not limited thereto. The processor 75 may send the heating stop instruction to the heating control device 6 when the actual temperature of the pipe becomes higher than the assumed temperature by first temperature (for example, 5%) or more, and sends the heating start instruction to the heating control device 6 when the actual temperature of the pipe becomes lower than the assumed temperature by second temperature (for example, 5%) or more.

### (Modification 4)

Although the description has been given in the embodiment regarding the case where the processor 75 of the heating control device 6 sends the heating stop instruction or heating start instruction to the heating device 4 based on the actual temperature and the assumed temperature of the pipe so as to change the temperature of the pipe along the assumed temperature by stopping or starting the heating (energization) using the heating device 4, the present invention is not limited thereto. A current may be changed by a variable resistor in the case of an AC power supply, and a current may be changed by a rectifier in the case of DC so that the temperature of the pipe is changed along to the assumed temperature.

### (Modification 5)

Although the description has been given in the embodiment regarding the case where the temperature of the pipe is measured and the heating (energization) using the heating device 4 is controlled such that the temperature of the pipe rises along the assumed temperature of the pipe, but the present invention is not limited thereto. For example, the temperature of the flexible joints may be measured, and the heating (energization) using the heating device 4 may be controlled such that the temperature of the flexible joints rises along the assumed temperature of the flexible joints. In this case, the assumed temperature of the flexible joints may be determined such that the temperature of the heat collection elements and the temperature of the pipe do not exceed the quality assurance temperature.

### (Modification 6)

Although the case where the solar heat collecting device 8 includes the four light collectors has been described in the embodiment, the present invention is not limited thereto. The solar heat collecting device 8 may include one, two, or three or more light collectors.

Any combination of the above-described embodiment and modifications is also useful as an embodiment of the present invention. The new embodiment resulting from the combination has the respective effects of the embodiment and modifications thus combined.

## Claims

1. A solar heat power generation system comprising a heat transfer fluid flow path (11, 21, 31, 41) through which a heat transfer fluid receiving solar heat flows, and a heating system (2) for heating the heat transfer fluid flow path (11, 21, 31, 41),
the heat transfer fluid flow path (11, 21, 31, 41) being constituted by a plurality of members which are connected in series and have different electric resistances, the heating system (2) comprising:
an energizer (67) that energizes the heat transfer fluid flow path (11, 21, 31, 41) by supplying an electric current to the heat transfer fluid flow path so as to heat the heat transfer fluid flow path (11, 21, 31, 41);
a temperature measurer (66) that measures temperature of one member among the plurality of members; and
a processor (75) that compares the measured temperature of the one member with assumed temperature of the one member, set in advance, with respect to an energization time and performs processing according to a result of the comparison,
wherein the processor (75) controls energization performed by the energizer (67) according to the comparison result,
and wherein the assumed temperature of the one member with respect to the energization time is set such that the plurality of members is warmed without exceeding the quality assurance temperature of each member of the plurality of members.

2. The solar heat power generation system according to claim 1, wherein
the processor (75) stops energization when the measured temperature of the one member exceeds the assumed temperature by predetermined temperature and starts energization when the measured temperature is lower than the assumed temperature by predetermined temperature.

3. The solar heat power generation system according to any one of claims 1 to 2, wherein
the one member whose temperature is measured by the temperature measurer (66) is a member having a lowest rate of temperature rise caused by energization among the plurality of members constituting the heat transfer fluid flow path (11, 21, 31, 41).

4. The solar heat power generation system according to any one of claims 1 to 3, wherein
the heat transfer fluid flow path (11, 21, 31, 41) is constituted by a plurality of heat collection elements that receive collected light, a plurality of flexible joints that are connected to the heat collection elements, and a plurality of pipes that connect the flexible joints to one another, and
the one member whose temperature is measured by the temperature measurer (66) is one of the pipes.

## Patentansprüche

1. Ein Solarwärme-Energieerzeugungssystem mit einem Wärmeübertragungsfluid-Strömungspfad (11, 21, 31, 41), durch den ein Wärmeübertragungsfluid strömt, das Solarwärme empfängt, und einem Heizsystem (2) zum Erwärmen des Wärmeübertragungsfluid-Strömungspfades (11, 21, 31, 41), wobei der Wärmeübertragungsfluid-Strömungspfad (11, 21, 31, 41) aus einer Vielzahl von Elementen besteht, die in Reihe geschaltet sind und unterschiedliche elektrische Widerstände aufweisen, wobei das Heizsystem (2) umfasst:
einen Erreger (67), der den Wärmeübertragungsfluid-Strömungspfad (11, 21, 31, 41) erregt, indem er dem Wärmeübertragungsfluid-Strömungspfad einen elektrischen Strom zuführt, um den Wärmeübertragungsfluid-Strömungspfad (11, 21, 31, 41) zu erwärmen;
einen Temperaturmesser (66), der die Temperatur eines Mitglieds aus der Vielzahl der Mitglieder misst; und
einen Prozessor (75), der die gemessene Temperatur des einen Elements mit der angenommenen Temperatur des einen Elements, die im Voraus festgelegt wurde, in Bezug auf eine Erregungszeit vergleicht und die Verarbeitung gemäß einem Ergebnis des Vergleichs durchführt,
wobei der Prozessor (75) die von der Erregungsquelle (67) durchgeführte Erregung entsprechend dem Vergleichsergebnis steuert,
und wobei die angenommene Temperatur des einen Elements in Bezug auf die Anregungszeit so eingestellt ist, dass die Mehrzahl von Elementen erwärmt wird, ohne die Qualitätssicherungstemperatur jedes Elements der Mehrzahl von Elementen zu überschreiten.

2. Solarwärme-Energieerzeugungssystem nach Anspruch 1, wobei
der Prozessor (75) die Stromzufuhr stoppt, wenn die gemessene Temperatur des einen Elements die angenommene Temperatur um eine vorbestimmte Temperatur übersteigt, und die Stromzufuhr startet, wenn die gemessene Temperatur um eine vorbestimmte Temperatur niedriger ist als die angenommene Temperatur.

3. Solarwärme-Energieerzeugungssystem nach einem der Ansprüche 1 bis 2, wobei
das eine Element, dessen Temperatur durch den Temperaturmesser (66) gemessen wird, ein Element mit der geringsten Temperaturanstiegsrate ist, die durch Erregung unter der Vielzahl von Element, die den Wärmeübertragungsfluid-Strömungspfad (11, 21, 31, 41) bilden, verursacht wird.

4. Solarwärme-Energieerzeugungssystem nach einem der Ansprüche 1 bis 3, wobei
der Wärmeübertragungsfluid-Strömungspfad (11, 21, 31, 41) durch eine Vielzahl von Wärmesammelelementen, die gesammeltes Licht empfangen, eine Vielzahl von flexiblen Verbindungen, die mit den Wärmesammelelementen verbunden sind, und eine Vielzahl von Rohren, die die flexiblen Verbindungen miteinander verbinden, gebildet wird, und
das eine Element, dessen Temperatur durch den Temperaturmesser (66) gemessen wird, eines der Rohre ist.

## Revendications

1. Système de génération d'énergie solaire thermique comprenant un trajet d'écoulement de fluide caloporteur (11, 21, 31, 41) à travers lequel circule un fluide caloporteur recevant de la chaleur solaire, et un système de chauffage (2) pour chauffer le trajet d'écoulement de fluide caloporteur (11, 21, 31, 41), le trajet d'écoulement de fluide caloporteur (11, 21, 31, 41) étant constitué d'une pluralité d'éléments qui sont connectés en série et ont différentes résistances électriques, le système de chauffage (2) comprenant :
un dispositif d'excitation (67) qui excite le trajet d'écoulement de fluide caloporteur (11, 21, 31, 41) en fournissant un courant électrique au trajet d'écoulement de fluide caloporteur afin de chauffer le trajet d'écoulement de fluide caloporteur (11, 21, 31, 41) ;
un mesureur de température (66) qui mesure la température d'un élément parmi la pluralité d'éléments ; et
un processeur (75) qui compare la température mesurée dudit élément à la température supposée dudit élément, réglée à l'avance, par rapport à un temps d'excitation et effectue un traitement en fonction d'un résultat de la comparaison, le processeur (75) commandant l'excitation effectuée par le dispositif d'excitation (67) en fonction du résultat de la comparaison, et la température supposée de l'un des éléments par rapport au temps d'excitation étant réglée de telle sorte que la pluralité d'éléments est chauffée sans dépasser la température d'assurance qualité de chaque élément de la pluralité d'éléments.

2. Système de génération d'énergie solaire thermique selon la revendication 1, dans lequel
le processeur (75) arrête l'excitation lorsque la température mesurée dudit élément dépasse la température supposée par une température prédéterminée et démarre l'excitation lorsque la température mesurée est inférieure à la température supposée par la température prédéterminée.

3. Système de génération d'énergie solaire thermique selon l'une quelconque des revendications 1 à 2, dans lequel
ledit élément dont la température est mesurée par le mesureur de température (66) est un élément ayant un taux d'élévation de température le plus faible provoqué par l'excitation parmi la pluralité d'éléments constituant le trajet d'écoulement du fluide caloporteur (11, 21, 31, 41).

4. Système de génération d'énergie solaire thermique selon l'une quelconque des revendications 1 à 3, dans lequel
le trajet d'écoulement de fluide caloporteur (11, 21, 31, 41) est constitué d'une pluralité d'éléments de collecte de chaleur qui reçoivent de la lumière collectée, d'une pluralité de joints flexibles qui sont reliés aux éléments de collecte de chaleur, et d'une pluralité de tuyaux qui relient les joints flexibles entre eux, et
ledit élément dont la température est mesurée par le mesureur de température (66) est l'un des tuyaux.
